# EUROPÄISCHE PATENTSCHRIFT

(11) **EP 1 715 300 B1**
(45) Veröffentlichungstag und Bekanntmachung des Hinweises auf die Patenterteilung: **24.08.2011**
(21) Anmeldenummer: 06006506.7
(22) Anmeldetag: 29.03.2006
(51) Int. Cl.: G01D 11/24

(54) **Hohlwellen-Drehgeber mit Motorwellen-Schutzkappe**
Hollow shaft rotary encoder comprising motor shaft protective cover
Encodeur à arbre creux pourvu d'un capot de protection d'arbres de moteurs

(30) Priorität: 21.04.2005 DE 202005006379 U
(43) Veröffentlichungstag der Anmeldung: 25.10.2006
(73) Patentinhaber: Hengstler GmbH, 78554 Aldingen (DE)
(72) Erfinder: Grigo, Uwe, 78166 Donaueschingen (DE); Wöhrstein, Andreas, 78126 Neuhausen (DE)
(74) Vertreter: Riebling, Peter

(56) Entgegenhaltungen:
- EP-A- 0 270 768
- EP-A- 0 802 399
- EP-A- 1 167 916
- US-A- 5 097 164
- US-A- 5 708 496

## Beschreibung

Die Erfindung betrifft einen Hohlwellen-Drehgeber mit Motorwellen-Schutzkappe nach dem Oberbegriff des Patentanspruches 1.

Derartige Hohlwellen-Drehgeber mit Motorwellen-Schutzkappe sind bereits zahlreich aus dem Stand der Technik bekannt, wobei die Motorwelle eines Motors, dessen Parameter wie z.B. Drehzahl oder Position bestimmt werden sollen, durch die Hohlwelle des Drehgebers geführt ist und dort gelagert ist. Der innere Lagerring der Hohlwelle des Drehgebers ist an der Motorwelle des Motors kraft- und/oder formschlüssig festgelegt und dreht mit gleicher Drehzahl mit, wobei der äußere Sensorring des Drehgebers feststeht. Durch die Relativdrehung des inneren Lagerrings zum feststehenden äußeren Sensorring des Drehgebers wird ein dem zu bestimmenden Parameter (z.B. Drehzahl oder Position Motorwelle) proportionales Messsignal erzeugt, welches über eine Schnittstelleneinheit des Drehgebers an eine externe Umform- und Auswerteeinheit ggf. mit Messsignalspeicher und -anzeige ausgegeben wird. Die Schnittstelleneinheit des Drehgebers ist im einfachsten Fall eine Steckkontaktleiste, kann aber auch bereits mit einer ersten internen Umformeinheit ausgestattet sein, oder sogar eine interne Auswerteeinheit enthalten, welche die externe Auswerteeinheit ersetzen kann.

Speziell bei Aufzugsmaschinen wird der Drehgeber am Motorende montiert und die Motorwelle selbst geht durch den Hohlwellendrehgeber hindurch. Bei rotierender Welle bietet die ungeschützte Welle eine Verletzungsgefahr. Aus diesem Grund wird auf den Drehgeber bzw. über die Welle eine Schutzkappe montiert, welche bisher beim Stand der Technik mit mehreren Schrauben befestigt wird. Da bei Ausfall der Maschine diese Welle dazu verwendet wird von Hand den Aufzug nach oben oder unten zu bewegen, muss die Schutzkappe vom Drehgeber wieder demontiert werden. Die Demontage der Kappe muss mit einem entsprechendem Werkzeug, insbesondere einem kleinen Schraubenschlüssel vorgenommen werden, was sehr mühsam und zeitintensiv ist.

Mit der DE 39 39 868 A1 ist ein Drehzahlaufnehmer für bürstenlose Motoren bekannt geworden, bei dem der Drehzahlaufnehmer mit seiner Hohlwelle über die Motorwelle aufgeschoben ist und über ein konisches Endstück kraftschlüssig mit der Motorwelle verbunden ist. Das konische Endstück ist über eine Schraube an der Stirnseite des freien Endes der Motorwelle mit dieser verbunden.

Verschiedenartige Bajonettverbindungen an Drehgebern sind z.B. aus der DE 199 23 900 A1, der DE 199 48 106 A1, der DE 196 41 929 A1, der DE 36 09 211 A1, bekannt geworden, bei denen jedoch die die Motorwelle abdeckende Abdeckung immer wesentliche Teile des Drehgebers beinhalten, wie z.B. Taktscheibe, Schnittstelleneinheit oder elektrische Anschlussleiste mit optischem Sensor. Nachteil ist, dass ein vordefinierter Winkelbereich als Relativlage zwischen der die Motorwelle abdeckenden Abdeckung und dem übrigen Drehgeber für die Montage eingehalten werden muss, was insbesondere bei schwer zugänglich oder schwer einsehbar positionierten Drehgebern hinderlich ist und somit zu Zeitverlusten bei der Montage und ggf. zu Beschädigungen des Drehgebers führen kann. Weiterhin ist nachteilig, dass bei einer Änderung der axialen Länge der Motorwelle auch die Abdeckung und/oder die übrige Basis des Drehgebers in der axialen Länge verändert werden müssen, was zu wesentlichen Kostennachteilen in Konstruktion, Herstellung, Montage und Lagerhaltung führt.

Die US 5,708,496 A offenbart bereits sämtliche Merkmale des Oberbegriffs des Patentanspruchs 1, wobei jedoch die Verbindung zwischen Hohlwellen-Drehgeber und Motorwellen-Schutzkappe durch eine Rast-Schnapp-Verbindung erfolgt und dabei eine Vielzahl von Vorsprüngen auf dem Innenumfang der Motorwellen-Schutzkappe in zugeordnete Nuten auf dem Außenumfang des HohlwellenDrehgebers rastend einschnappen.

Auch die EP 0270768 A2 und A3 offenbart eine Verbindung zwischen HohlwellenDrehgeber und Motorwellen-Schutzkappe, die zeichnerisch zwischen dem Innenumfang der Motorwellen-Schutzkappe und dem Außenumfang des HohlwellenDrehgebers dargestellt ist, jedoch nicht näher offenbart ist.

Die US 5,097,164 A offenbart einen Dichtungsring zwischen den sich gegenüberliegenden Stirnseiten des Hohlwellen-Drehgebers und der Motorwellen-Schutzkappe, wobei sich dieser Dichtungsring in einer radial äußeren stimseitigen Ringnut der Motorwellen-Schutzkappe befindet.

Aufgabe der vorliegenden Erfindung ist, einen gattungsgemäßen HohlwellenDrehgeber mit Motorwellen-Schutzkappe derart weiterzubilden, dass dieser kostengünstiger und einfacher in Konstruktion, Herstellung, Montage, Lagerhaltung, Wartung und Reparatur ist.

Zur Lösung der Aufgabe ist die Erfindung durch die Merkmale des Patentanspruchs 1 gekennzeichnet.

Wesentliche Merkmale sind, dass die Verbindung zwischen Motorwellenkappe und Hohlwellen-Drehgeber über wiederholt lös- und verbindbare kraft- und/oder formschlüssige Verbindungsmittel über eine Relativbewegung zwischen Motorwellen-Schutzkappe und Hohlwellen-Drehgeber bewerkstelligt wird, und dass der Hohlwellen-Drehgeber alle für die Aufnahme und Ausgabe der Messsignale elektrischen und mechanischen Bauteile beinhaltet und an der Motorwellen-Schutzkappe keinerlei elektrische oder mechanische Bauteile für die Aufnahme und Ausgabe der Messsignale befestigt sind.

Vorteil dabei ist, dass unabhängig von der axialen Länge des freien Endes der Motorwelle, ein Hohlwellen-Drehgeber mit allen nötigen elektrischen und mechanischen Bauteilen zur Aufnahme und Ausgabe der Messsignale verwendet werden kann und eine dementsprechend in der axialen Länge angepasste, einfache und kostengünstige Motorwellen-Schutzkappe. Somit kann für alle axialen Längen des freien Endes einer Motorwelle immer ein und derselbe Hohlwellen-Drehgeber eingesetzt werden und nur noch eine daraufhin in der axialen Länge angepasste Motorwellen-Schutzkappe wird benötigt. Der erfindungsgemäße HohlwellenDrehgeber mit Motorwellen-Schutzkappe wird dadurch in allen Bereichen wesentlich kostengünstiger, sowie einfacher in der Handhabung. Weiterer Vorteil ist, dass eine schnelle Demontage der Schutzkappe möglich ist, was gerade bei sicherheitsrelevanten Anwendungen, wie etwa im Evakuierungsfall bei Aufzügen sehr wichtig ist, wo quasi jede Sekunde zählt. D.h. es muss nicht lange nach einem Werkzeug gesucht werden, um die Schutzkappe zu demontieren.

Die Lösung ist eine integrierte Lösung im Drehgeber selbst, d.h. die Befestigung der Schutzkappe ist im Deckel bzw. der Kappe des Drehgebers integriert. D.h. auch, die Schutzkappe kann insbesondere ohne Werkzeug montiert und demontiert werden, dieses macht insbesondere ein Bajonettverschluss in der Kappe selbst möglich.

Die Art der Befestigung der Schutzkappe auf dem Drehgebergehäuse soll insbesondere ohne Werkzeug möglich sein, und an eine spezielle Ausführungsform gebunden sein, nämlich den Bajonettverbindungen als wiederholt lös- und verbindbare formschlüssige Verbindungsmittel.

Hohlwellen-Drehgeber und Motorwellen-Schutzkappe sind axial stirnseitig aneinander gekuppelt. So kann der Hohlwellen-Drehgeber in einer axialen Ausnehmung in der Motorwellen-Schutzkappe mindestens teilweise aufgenommen sein oder analog umgekehrt die Motorwellen-Schutzkappe mindestens teilweise in einer axialen Ausnehmung im Hohlwellen-Drehgeber aufgenommen sein. Der stirnseitige freie Rand der Motorwellen-Schutzkappe ist in einer ringsumlaufenden Ringnut in der Stirnseite des Hohlwellen-Drehgebers aufgenommen und liegt dort formschlüssig fest.

Ein weiteres Merkmal der Verschlussmöglichkeit eines Hohlwellendrehgebers kann auch jegliche andere geometrische Form der Schutzkappe sein. Also beispielsweise kürzere bzw. flachere Form um das hintere Wellenende des Drehgebers zu verschließen und/oder abzudichten.

Die Motorwellen-Schutzkappeist topfförmig ausgebildet und besitzt eine konisch sich vom Hohlwellen-Drehgeber weg zuspitzende Form.

Die Form des Gehäuses des Hohlwellen-Drehgeber ist dabei bevorzugt zylindrisch, wobei radial vom Außenmantel weg die elektrischen Anschlüsse für die Energieversorgung und die Signalleitungen ragen.

Im Folgenden wird die Erfindung anhand von lediglich einem Ausführungsweg näher erläutert. Hierbei gehen aus ihrer Beschreibung weitere Merkmale und Vorteile der Erfindung hervor.

Beim Hohlwellen-Drehgeber mit Motorwellen-Schutzkappe im zusammengebauten Zustand ist die Motorwellen-Schutzkappe über eine 3-flügelige Bajonettverbindung mit dem Hohlwellen-Drehgeber verbunden. Es kann zur Montage die Motorwellen-Schutzkappe in drei unterschiedlichen Positionen stirnseitig auf dem HohlwellenDrehgeber aufgesetzt werden und dann in Uhrzeigerrichtung oder Gegenuhrzeigerrichtung verdreht werden, bis die Flügel des Hohlwellen-Drehgebers und der Motorwellen-Schutzkappe axial übereinander zu liegen kommen und damit ein axiales Abziehen nicht mehr möglich ist. Zur weiteren Lagensicherung kann in der Relativposition eine zusätzliche Verrastung zwischen Hohlwellen-Drehgeber und Motorwellen-Schutzkappe vorgesehen sein.

Der Hohlwellen-Drehgeber beinhaltet ein zylindrisches Gehäuse, in dessen Innenraum die vollständigen elektrischen und mechanischen Bauteile für einen voll funktionsfähigen Hohlwellen-Drehgeber aufgenommen sind. Zentral mittig durch das Gehäuse ist die Durchgangsöffnung zur Aufnahme der Motorwelle. In einer oder beiden Stirnseiten des zylindrischen Gehäuses ist dann eine Vertiefung für die Bajonettverbindung vorhanden, die eingefräst oder im Spritzwerkzeug als "Negativ" eingebracht sein kann. Die Vertiefung beinhaltet drei gleichmäßig über den Umfang verteilt angeordnete Flügel, die einen größeren Innendurchmesser "di" haben, als der Durchmesser der Durchgangsöffnung. Der Innendurchmesser di ist jedoch kleiner als der Außendurchmesser "da" der drei Ausbuchtungen zum Einfädeln der Flügel der Motorwellen-Schutzkappe hat.

Auf dem Mantel des Hohlwellen-Drehgebers ist der Abgang und Zugang für die elektrischen Leitungskabel vorgesehen zur Zuführung der eventuell nötigen el. Energie und zum Abführen der im Drehgeber erzeugten Messsignale. Der Abgang und Zugang für die elektrischen Leitungskabel ist beispielhaft mit einem Gewinde zur Kupplung an ein Übertragungskabel und eine Umform- und Auswerteeinheit ausgestattet, kann aber in anderen Ausführungsformen beliebig anders gestaltet sein, so z.B. als reibschlüssige Steckverbindung oder als geschraubte oder geklemmte Lüsterklemme.

Die Motorwellen-Schutzkappe weist eine topfförmige Grundform auf, wobei sich von einer kreisförmigen Basisscheibe ein konusförmiger Mantel axial in Richtung auf einen radialen Ansatz in Form der drei Flügel sich öffnend erstreckt. Die drei Flügel sind gleichmäßig am Umfang angeordnet, zwischen denen sich drei Ausnehmungen befinden. Auf der Basisscheibe ist ein Sechskant zur Aufnahme eines Werkzeugs bei der Montage/Demontage vorhanden, falls dies nötig sein sollte, z.B. nach einer langen Betriebsdauer ohne Abnahme der Motorwellen-Schutzkappe.

Als Verrastung sind auf den Flügeln axial eingeprägte Rippen vorhanden, die sich dann axial an der Unterseite der Flügel des Hohlwellen-Drehgebers anlegen.

Natürlich können auch nur zwei oder mehr als drei Flügel der Bajonettverbindung vorhanden sein, je nach Anforderungen, bevorzugt sind aber drei Flügel am Hohlwellen-Drehgeber und drei Flügel an der Motorwellen-Schutzkappe. Die Flügel müssen auch nicht notwendiger Weise über den Umfang gleichmäßig verteilt sein, sondern können auch andere Winkel als 120° (3 Flügel), 180°(2 Flügel), 90° (4 Flügel), 60° (6 Flügel) zwischen sich einschließen.

Zwischen Hohlwellen-Drehgeber und Motorwellen-Schutzkappe ist im Bereich der Bajonettverbindung ein O-Ring als Dichtung eingebracht, der in einer Ringnut liegt, die sich im ringförmigen Übergangsbereich zwischen Mantel und Flügeln bzw. Ausnehmungen befinden.

Der Hohlwellen-Drehgeber besitzt die hohle Geberwelle, die über zwel Kugellager drehbar zum Stator des Hohlwellen-Drehgeber gelagert ist. Der auf der Motorwelle aufgeschobene Hohlwellen-Drehgeber ist z.B. stirnseitig über eine Wellenbefestigung mit Gewindescheibe und Sicherungsring gegen axiales Abziehen auf der Motorwelle befestigt. Eine zusätzliche Verdrehsicherung (z.B. Federkeil) des Hohlwellen-Drehgebers auf der Motorwelle kann vorgesehen sein, zusätzlich zum kraftschlüssigen Sitz. Natürlich sind auch andere Befestigungsarten des HohlwellenDrehgeber auf der Geberwelle möglich, so z.B. mit sogenannten Drehmomentstützen.

Es ist eine weitere Verrastung auf den Unterseiten der Flügel des HohlwellenDrehgebers vorhanden, zusätzlich oder alternativ zu der Verrastung auf den Flügeln der Motorwellen-Schutzkappe. Es kann hierdurch auch ein Schließrichtung und Öffnungsrichtung festgelegt sein, aber auch ein Durchdrehen in beiden Richtungen möglich sein.

## Patentansprüche

1. Hohlwellen-Drehgeber mit topfförmiger Motorwellen-Schutzkappe, die miteinander über kraft- und/oder formschlüssige Verbindungsmittel über eine Relativbewegung zwischen Motorwellen-Schutzkappe und Hohlwellen-Drehgeber ohne Werkzeug wiederholt lös- und verbindbar sind, wobei der Hohlwellen-Drehgeber alle für die Aufnahme und Ausgabe der Messsignale elektrischen und mechanischen Bauteile beinhaltet und an der Motorwellen-Schutzkappe keinerlei elektrische oder mechanische Bauteile für die Aufnahme und Ausgabe der Messsignale befestigt sind, wobei die Verbindungsmittel im Hohlwellen-Drehgeber und der Motorwellen-Schutzkappe integriert sind, **dadurch gekennzeichnet, dass** die Verbindungsmittel eine Bajonettverbindung zwischen HohlwellenDrehgeber und Motorwellen-Schutzkappe ist, und die Bajonettverbindung Flügel am Hohlwellen-Drehgeber und an der Motorwellen-Schutzkappe aufweist, die im Montagezustand zusammenwirken und damit ein axiales Abziehen der Motorwellen-Schutzkappe von dem Hohlwellen-Drehgeber verhindern, wobei Hohlwellen-Drehgeber und Motorwellen-Schutzkappe axial stirnseltig aneinander gekuppelt sind und wobei die Motorwellen-Schutzkappe konisch ausgebildet ist und eine sich vom HohlwellenDrehgeber weg zuspitzende Form aufweist.

2. Hohlwellen-Drehgeber mit Motorwellen-Schutzkappe nach Anspruch 1, **dadurch gekennzeichnet, dass** in einer oder beiden Stirnseiten des Gehäuses des Hohlwellen-Drehgebers eine Vertiefung für die Bajonettverbindung vorhanden ist, die die Flügel beinhaltet die einen größeren Innendurchmesser "di" haben, der kleiner als der Außendurchmesser "da" ist, der Ausbuchtungen zum Einfädeln der Flügel der Motorwellen-Schutzkappe hat.

3. Hohlwellen-Drehgeber mit Motorwellen-Schutzkappe nach einem der Ansprüche 1 oder 2, **dadurch gekennzeichnet, dass** bei der Mototwellen-Schutzkappe sich von einer kreisförmigen Basisscheibe ein konusförmiger Mantel axial in Richtung auf einen radialen Ansatz in Form der Flügel sich öffnend erstreckt, zwischen denen sich Ausnehmungen befinden.

4. Hohlwellen-Drehgeber mit Motorwellen-Schutzkappe nach Anspruch 3, **dadurch gekennzeichnet, dass** auf der Basisscheibe ein Sechskant zur Aufnahme eines Werkzeugs bei der Montage/Demontage vorhanden ist.

5. Hohlwellen-Drehgeber mit Motorwellen-Schutzkappe nach einem der Ansprüche 1 bis 4, **dadurch gekennzeichnet, dass** das Gehäuse des Hohlwellen-Drehgebers eine zylindrische Grundform aufweist.

6. Hohlwellen-Drehgeber mit Motonrvellen-Schutzkappe nach einem der Ansprüche 1 bis 5, **dadurch gekennzeichnet, dass** der Zu- und Abgang für die elektrischen Leitungen zum und vom Hohlwellen-Drehgeber über eine Schraubverbindung oder eine reibschlüssige Steckverbindung oder eine geschraubte/geklemmte Lüsterklemme erfolgt.

7. Hohlwellen-Drehgeber mit Motorwellen-Schutzkappe nach einem der Ansprüche 1 bis 6, **dadurch gekennzeichnet, dass** der Zu- und Abgang für die elektrischen Leitungen zum und vom Hohlwellen-Drehgeber etwa radial oder schräg oder axial über eine L-förmige Winkelverbindung vom Mantel des Gehäuses aus sich weg erstrecken.

8. Hohlwellen-Drehgeber mit Motorwellen-Schutzkappe nach einem der Ansprüche 1 bis 7, **dadurch gekennzeichnet, dass** zwischen HohlwellenDrehgeber und Motorwellen-Schutzkappe ein Dichtring eingebracht ist.

9. Hohlwellen-Drehgeber mit Motorwellen-Schutzkappe nach Anspruch 8, **dadurch gekennzeichnet, dass** der Dichtring in einer Ringnut im Hohlwellen-Drehgeber und/oder in der Motorwellen-Schutzkappe liegt.

## Claims

1. Hollow shaft encoder with a pot-shaped motor shaft protective cap, which are repeatedly releasable from and connectable to one another by means of non-positive and/or positive connecting means via a relative movement between the motor shaft protective cap and hollow shaft encoder without a tool, the hollow shaft encoder containing all the electrical and mechanical components to receive and output the measuring signals and no electrical or mechanical components of any kind being fastened to the motor shaft protective cap to receive and output the measuring signals, the connecting means being integrated in the hollow shaft encoder and the motor shaft protective cap, **characterised in that** the connecting means is a bayonet connection between the hollow shaft encoder and motor shaft protective cap and the bayonet connection has wings on the hollow shaft encoder and on the motor shaft protective cap, which cooperate in the assembled state and thus prevent an axial removal of the motor shaft protective cap from the hollow shaft encoder, the hollow shaft encoder and motor shaft protective cap being coupled to one another axially on the end face and the motor shaft protective cap being conical and having a shape which tapers away from the hollow shaft encoder.

2. Hollow shaft encoder with a motor shaft protective cap according to claim 1, **characterised in that** present in one or both end faces of the housing of the hollow shaft encoder is an indentation for the bayonet connection, which contains the wings, which have a larger internal diameter "di", which is smaller than the external diameter "da", which has bulges for threading in the wings of the motor shaft protective cap.

3. Hollow shaft encoder with a motor shaft protective cap according to either of claims 1 or 2, **characterised in that**, in the motor shaft protective cap, a conical casing extends from a circular base disc, opening axially in the direction of a radial attachment in the form of the wings, between which recesses are located.

4. Hollow shaft encoder with a motor shaft protective cap according to claim 3, **characterised in that** a hexagon is present on the base disc to receive a tool during assembly/disassembly.

5. Hollow shaft encoder with a motor shaft protective cap according to any one of claims 1 to 4, **characterised in that** the housing of the hollow shaft encoder has a cylindrical base shape.

6. Hollow shaft encoder with a motor shaft protective cap according to any one of claims 1 to 5, **characterised in that** the inlet and outlet for the electrical lines to and from the hollow shaft encoder are implemented by means of a screw connection or a frictionally engaged plug connection or a screwed/clamped luster terminal.

7. Hollow shaft encoder with a motor shaft protective cap according to any one of claims 1 to 6, **characterised in that** the inlet and outlet for the electrical lines to and from the hollow shaft encoder extend out from the casing of the housing approximately radially or obliquely or axially via an L-shaped angle connection.

8. Hollow shaft encoder with a motor shaft protective cap according to any one of claims 1 to 7, **characterised in that** a sealing ring is introduced between the hollow shaft encoder and motor shaft protective cap.

9. Hollow shaft encoder with a motor shaft protective cap according to claim 8, **characterised in that** the sealing ring is located in an annular groove in the hollow shaft encoder and/or in the motor shaft protective cap.

## Revendications

1. Transmetteur de rotation d'arbre creux avec un capot de protection d'arbre de moteur en forme de pot qui sont aptes à être détachés et reliés à plusieurs reprises sans outil par des moyens de liaison par force et/ou par complémentarité de forme grâce à un mouvement relatif entre ledit capot de protection d'arbre de moteur et le transmetteur de rotation d'arbre creux, étant précisé que le transmetteur de rotation d'arbre creux contient toutes les pièces électriques et mécaniques pour recevoir et émettre les signaux de mesure et qu'aucune pièce électrique ou mécanique pour recevoir et émettre les signaux de mesure n'est fixée au capot de protection d'arbre de moteur, et étant précisé que les moyens de liaison sont intégrés dans le transmetteur de rotation d'arbre creux et dans le capot de protection d'arbre de moteur, **caractérisé en ce que** les moyens de liaison consistent en une liaison à baïonnette entre le transmetteur de rotation d'arbre creux et le capot de protection d'arbre de moteur, et la liaison à baïonnette comporte des ailettes, sur le transmetteur de rotation d'arbre creux et sur le capot de protection d'arbre de moteur, qui coopèrent en position de montage et qui empêchent ainsi que ledit capot de protection soit retiré axialement dudit transmetteur de rotation, étant précisé que le transmetteur de rotation d'arbre creux et le capot de protection d'arbre de moteur sont accouplés axialement, côté frontal, et que ledit capot de protection est conique et a une forme effilée en pointe à partir dudit transmetteur de rotation

2. Transmetteur de rotation d'arbre creux avec un capot de protection d'arbre de moteur selon la revendication 1, **caractérisé en ce qu'**il y a dans un côté frontal ou dans les deux côtés frontaux du boîtier du transmetteur de rotation d'arbre creux un creux pour la liaison à baïonnette qui contient les ailettes qui ont un assez grand diamètre intérieur "di" plus petit que le diamètre extérieur "da" qui présente des indentations pour enfiler les ailettes du capot de protection d'arbre de moteur.

3. Transmetteur de rotation d'arbre creux avec un capot de protection d'arbre de moteur selon l'une des revendications 1 ou 2, **caractérisé en ce que** sur ledit capot de protection, une enveloppe conique s'étend axialement, à partir d'une plaque de base circulaire, en s'ouvrant en direction d'un rebord radial en forme d'ailettes entre lesquelles se trouvent des creux.

4. Transmetteur de rotation d'arbre creux avec un capot de protection d'arbre de moteur selon la revendication 3, **caractérisé en ce qu'**il y a sur la plaque de base un six pans pour recevoir un outil lors du montage/démontage.

5. Transmetteur de rotation d'arbre creux avec un capot de protection d'arbre de moteur selon l'une des revendications 1 à 4, **caractérisé en ce que** le boîtier dudit transmetteur de rotation présente une forme de base cylindrique.

6. Transmetteur de rotation d'arbre creux avec un capot de protection d'arbre de moteur selon l'une des revendications 1 à 5, **caractérisé en ce que** l'accès et la sortie pour les lignes électriques audit transmetteur et à partir de celui-ci se font grâce à une liaison par vissage ou à une liaison emboîtée par friction ou à un domino vissé/serré.

7. Transmetteur de rotation d'arbre creux avec un capot de protection d'arbre de moteur selon l'une des revendications 1 à 6, **caractérisé en ce que** l'accès et la sortie pour les lignes électriques audit transmetteur et à partir de celui-ci s'étendent à partir de l'enveloppe du boîtier à peu près radialement ou en biais ou axialement par l'intermédiaire d'une liaison coudée en L.

8. Transmetteur de rotation d'arbre creux avec un capot de protection d'arbre de moteur selon l'une des revendications 1 à 7, **caractérisé en ce qu'**une bague d'étanchéité est montée entre le transmetteur de rotation d'arbre creux et le capot de protection d'arbre de moteur.

9. Transmetteur de rotation d'arbre creux avec un capot de protection d'arbre de moteur selon la revendication 8, **caractérisé en ce que** la bague d'étanchéité se trouve dans une rainure annulaire dans le transmetteur de rotation d'arbre creux et/ou dans le capot de protection d'arbre de moteur.
